# EUROPEAN PATENT SPECIFICATION

(11) **EP 0 984 835 B1**
(45) Date of publication and mention of the grant of the patent: **11.12.2002**
(21) Application number: 98923031.3
(22) Date of filing: 27.05.1998
(51) Int. Cl.: B09B 3/00, B09B 1/00

(54) **A METHOD FOR PRODUCING A CONCRETE CONTAINER FOR PERMANENT WASTE STORAGE AND META-STRUCTURES CONSTRUCTED THEREIN**
VERFAHREN ZUR HERSTELLUNG VON ZUR PERMANENTEN ABFALLAGERUNG VORGESEHENEN BETONCONTAINERN UND AUS IHNEN GEBILDETE STRUKTUREN
PROCEDE DE PRODUCTION D'UN CONTENEUR DE STOCKAGE EN BETON POUR LE STOCKAGE PERMANENT DES DECHETS ET METASTRUCTURES CONSTRUITES A L'INTERIEUR DUDIT CONTENEUR

(30) Priority: 29.05.1997 IL 12095197
(43) Date of publication of application: 15.03.2000
(73) Proprietor: Mesinger, Josoha, Haifa (IL)
(72) Inventor: Mesinger, Josoha, Haifa (IL)
(74) Representative: Pellmann, Hans-Bernd, Dipl.-Ing.
(86) International application number: IL9800244
(87) International publication number: WO98053928

(56) References cited:
- WO-A-94/02262
- DE-A- 3 603 080
- US-A- 3 848 392
- US-A- 5 021 205
- US-A- 5 254 265

## Description

### FIELD OF THE INVENTION

The present invention relates to a method for producing a concrete container for permanent waste storage. More specifically, the present invention relates to a method for efficiently disposing of waste (in the concrete containers so produced) and simultaneously to meta-structures (e.g. wave breakers, dams, dikes, etc.) constructed from a plurality of these containers.

### BACKGROUND OF THE INVENTION

Problems with waste disposal around the world are increasingly troublesome. World population produces garbage in large and increasing quantities; and how to dispose of garbage in a way which is inexpensive becomes a problem. There are well known methods for burning garbage in large dumps, producing smoke and smell; and damaging the environment. There are also methods for dumping garbage into the earth. These methods are expensive and require transporting garbage from urban centers to dumping areas.

Removing the garbage from urban centers is becoming increasingly difficult and dumping areas are slowly becoming "garbage mountains" which damage both the view and the environment, in addition to the smoke and smell which they produce. Garbage transportation from urban centers to distant areas for dumping or burning is expensive and also damages uninhabited natural areas.

The present invention provides a solution to transportation and environmental problems related to waste disposal, as well as to related expenses, by utilizing accumulated garbage for drying seashore areas, as well as for the construction of wave breakers, dams and dikes, support walls, stabilizing earth slopes, bunkers, etc.

Other similar methods for permanent waste disposal by sealing the waste inside concrete blocks are disclosed in US 5021205, US 5254265, DE 3603080 and WO/94/02262.

### SUMMARY OF THE INVENTION

The present invention relates to a method for producing a concrete container for permanent waste storage. This method is comprised of casting a base member from concrete, placing compressed refuse onto or into the base member, and attaching a covering member to the base member for sealing the refuse therein.

The present invention also relates to the containers, and to using a plurality of these sealed concrete containers as building elements for constructing meta-structures (e.g. support walls, earth slope stabilizing barriers, bunkers, wave breakers, dams, dikes, etc.).

### DETAILED DESCRIPTION OF THE INVENTION

In the context of the present invention "refuse" relates to domestic waste products, industrial process waste material, and municipal garbage. This refuse may also be raw untreated garbage, incinerator ash, pulverized rubbish, or compacted trash.

In the context of the present invention "strengthening members" relates to iron reinforcement rods, cable, wire mesh, or reinforced concrete columns. Furthermore according to the preferred embodiment of the method of the present invention the strengthening members are anodized, coated with plastic, or covered with a means for protecting against corrosion.

The method for producing a concrete container for permanent waste storage according to the present invention is comprised of:
(a) Casting a base member from concrete.
(b) Placing compressed refuse onto or into the base member.
(c) Attaching a covering member to the base member (for sealing the refuse therein).

There are two basic scenarios through which the method of the present invention can be accomplished. According to scenario "A" the base member has a chamber for holding the refuse, and the covering member is an attachable closure plate for the chamber. According to scenario "B" the base member is a platform onto which the refuse is arranged, and the covering member has a chamber which then encloses the refuse and attaches to the platform.

For convenience of understanding the preferred embodiments of the method of the present invention will be described separately for scenario "A" and for scenario "B". Intrinsically there are also many other embodiment of the method of the present invention which are according to intermediate scenarios. For example, both the base member and the covering member have a chamber, and the open sides of the two members are attached after refuse is arranged in the volume which will be enclosed between the two members.

In the preferred embodiment of the method of the present invention according to both scenarios "A" and "B":
(a) The covering member is cast from concrete. (According to other embodiments of the present invention the covering member may be made from any permanent attachable material.)
(b) The covering member is simultaneously cast (from concrete - in place) and attached (to the base member).
(c) The base member or the covering member is cast onto a plurality of strengthening members.
(d) The compressed refuse (or the package or packages thereof) contains a plurality of strengthening members. This serves to increase the load bearing capacity of the resultant containers - and this is advantageous when these containers are used as building elements (as will be subsequently discussed).
(e) The shape of the packaged compressed refuse is approximately identical to the shape of the volume of the interior of the base member or approximately identical to the shape of the interior of the covering member.
(f) The base member or the covering member has at least one outlet or valve, for allowing gas expulsion from the interior volume of the concrete container. This is important when the refuse contains decaying biological materials, and also when the refuse contains chemically reacting materials.
(g) Incinerated refuse is mixed with the concrete, and this mixture is used for casting the base member or the covering member.

In the preferred embodiment of the method of the present invention according to scenario "A" (where the base member has the refuse holding chamber):
(a) The base member has an open top side and the base member is in the shape of a cube, a rectangular box, a partial sphere, a cylinder, or an obelisk. Furthermore, the covering member is square, circular, or rectangular.
(b) The open side (of the base member) is the largest side.
(c) The refuse is compressed into the base member.
(d) The refuse is incinerated prior to placing into the base member.

In the preferred embodiment of the method of the present invention according to scenario "B" (where the base member is a platform):
(a) The covering member has an open bottom side and the covering member is in the shape of a cube, a rectangular box, a partial sphere, a cylinder, or an obelisk. Furthermore, the base member is square, circular, or rectangular.
(b) The open side (of the covering member) is the largest side.
(c) The compressed refuse is packaged prior to placing onto the base member.
(d) The compressed refuse is packaged by wrapping in polyethylene film or by shrink wrapping with plastic film or by wrapping in a plurality of strengthening members.
(e) The covering member is cast by spraying the concrete onto the packaged compressed refuse (which has been placed onto the base member).

The present invention also relates to the container produced according to the aforesaid method (in all of its variations). This resultant container is comprised of a base member, a covering member attached to the base member such that a chamber is formed between them, and compressed refuse filling the chamber.

The preferred embodiment of the present invention (according to all possible scenarios for container production) also relates to using a plurality of the (sealed refuse filled) containers as building elements for constructing meta-structures. According to the present invention the method for constructing these meta-structures is comprised of stacking, arranging, attaching or scattering a plurality of these building elements in a predetermined pattern.

These meta-structures (of building elements) may form support walls, earth slope stabilizing barriers, bunkers, defense walls, sea ports, wave breakers, dams, dikes, or the like.

The spaces between these sealed concrete (refuse filled) containers may be filled with earth, sand, clay, or stones. For example, the concrete (refuse filled) containers can be placed in the sea at a certain distance one from the other, and filling material (such as earth or stones) can be placed between them; thus creating a designed strengthening of the resultant meta-structure (e.g. in cases of cracks developing in individual containers or in the meta-structure).

Furthermore, when outlets or valves are incorporated (into the base members or covering members), these outlets or valves are connected (according to the preferred embodiment of the present invention) to a network of tubes or pipes (for directing the expelled gases to a predetermined location).

To optimize the associated transportation costs (of the method according to the present invention) the compressed refuse is placed onto (or into) the base members at (or near) the site of the construction (of a meta-structure).

For example, the method of the present invention is especially useful for drying seashore areas. According to this method large quantities of waste are compressed inside a concrete container. The concrete (refuse filled) container may then be then transported to the bottom of the sea, or to an adequate drying area. This solves (on the one hand) the problem of waste disposal without damaging the environment, and provides (on the other hand) a method for drying areas of land near the sea shore.

The building elements of the meta structure are used (for drying seashore areas) to form the filling mass, the external super structure , or the sea wall of a man-made island or a man-made peninsula. The term "drying seashore areas" in this invention also relates to the construction of wave breakers, dams, dikes and sea ports.

The present invention can also be utilized to erect support walls, bunkers, and defense walls for the army.

The present invention is surprisingly simple and may be used to solve a double problem: it disposes' of urban waste cleanly and effectively - at minimal transportation cost; and it promotes the construction of new and valuable land areas in urban centers located near the seashore.

Concrete containers may be produced and filled near the sea shore and can be transported' in special transport ships to pre-determined spots for disposal on the bottom of the sea. Thus the expenses related to the disposal of waste inside the concrete chambers are compensated by profits produced by new constructed land areas, wave breakers, sea ports, dams, or dikes.

The present invention will be further described and clarified in detail by Figures 1-6. These figures are solely intended to illustrate the preferred embodiment of the invention and are not intended to limit the scope of the invention in any manner.

Figure 1 illustrates an isometric view of a concrete cube shaped base member - containing compressed garbage.

Figure 2 illustrates a cross section view of a covering member attached to the concrete cube shaped base member (from Figure 1).

Figure 3 illustrates a cross section view of another variation for attachment between a concrete cube shaped base member and a covering member.

Figure 4 illustrates a series of concrete (refuse filled) containers at the bottom of the sea, during the process of drying; and this meta-structure is seen from above.

Figure 5 illustrates a cross section of a refuse filled concrete container having strengthening member incorporated.

Figure 6 illustrates cross sections of embodied means for attaching and sealing a covering member to a base member.

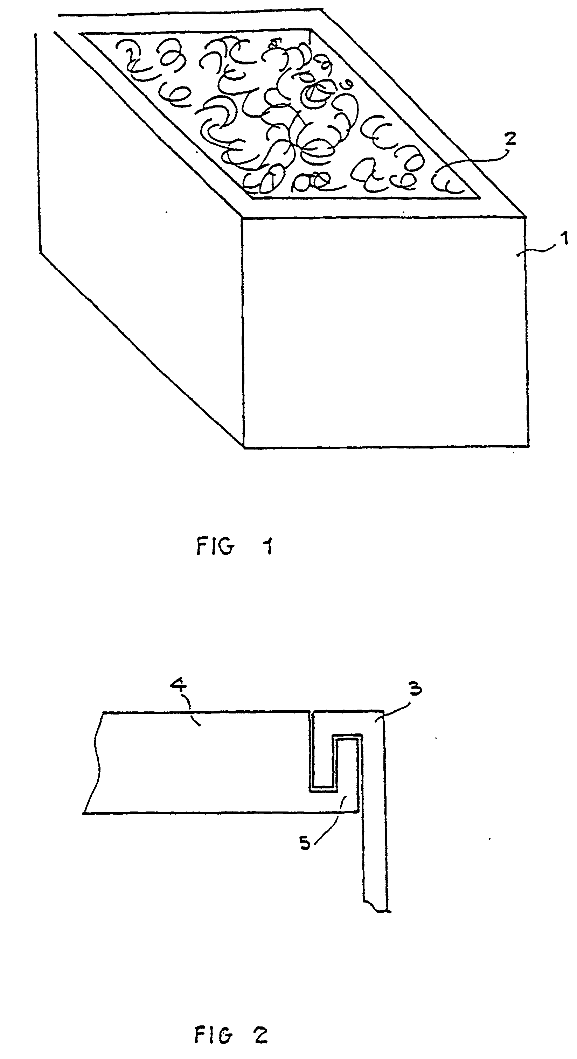

Figure 1 illustrates an isometric view of a concrete cube shaped base member - containing compressed garbage. A concrete cube shaped base member (1), (preferably reinforced with strengthening members) containing compressed garbage (2) is shown.

Figure 2 illustrates a cross section view of a covering member attached to the concrete cube shaped base member (from Figure 1). The upper part of the wall of the cube shaped base member, folded at one extremity (3) is shown. The concrete covering member (4) (partially shown) has been cast on the compressed garbage (filling the base member). Also the concrete has penetrated through an opening space of the upper fold of the side wall (5) in order to seal the garbage inside, and simultaneously forming the concrete (cube shaped) waste storage container.

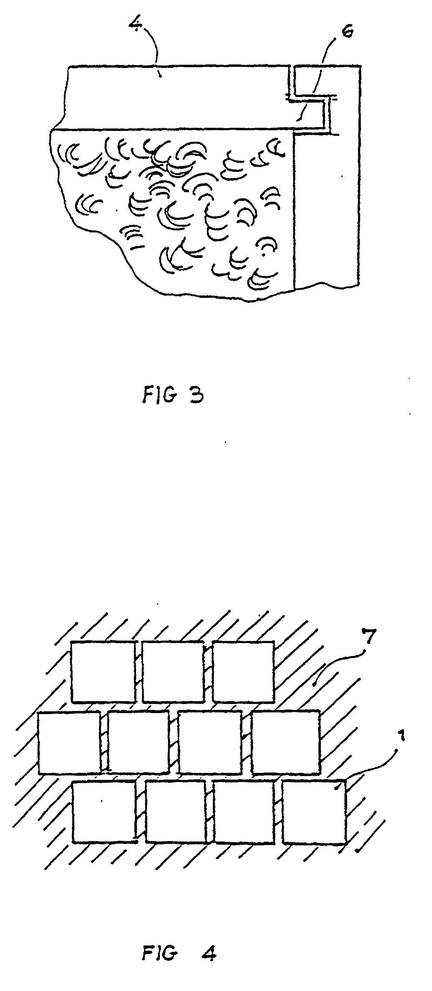

Figure 3 illustrates a cross section view of another variation for attachment between a concrete cube shaped base member and a covering member. Shown here is another possibility for casting a concrete covering member (4) onto the upper part of the concrete cube shaped base member. Casting concrete on the upper part is carried out through an opening space on the upper part of the concrete cube (6).

Figure 4 illustrates a series of concrete (refuse filled) containers at the bottom of the sea, during the process of drying; and this meta-structure is seen from above. Shown here are a series of concrete cubes shaped permanent waste storage containers (filled with garbage) which have been placed on the bottom of the sea (during the process of land fill creation (drying). The spaces between the concrete containers (1) have been filled with stones.

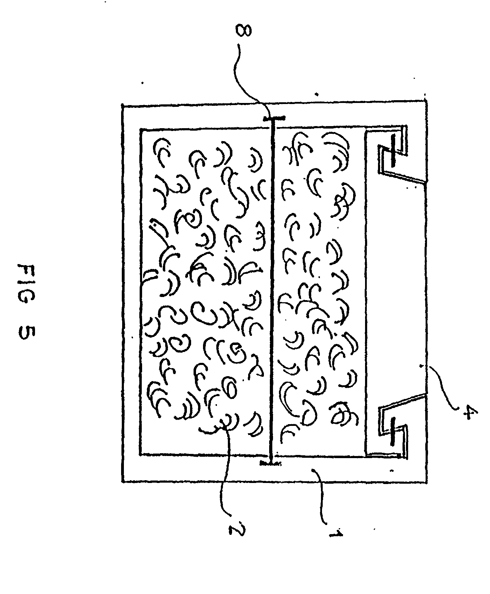

Figure 5 illustrates a cross section of a refuse filled concrete container having strengthening member incorporated. A covering member (4) (partially shown) has been cast onto the refuse (2) filled base member (1) (partially shown). A strengthening member (8) corrosion protected iron rod (partially shown) has been cast into the base member with the rod's ends locked into the aggregate of the base member's walls, and with the central length of the rod extending through the base member's refuse holding chamber.

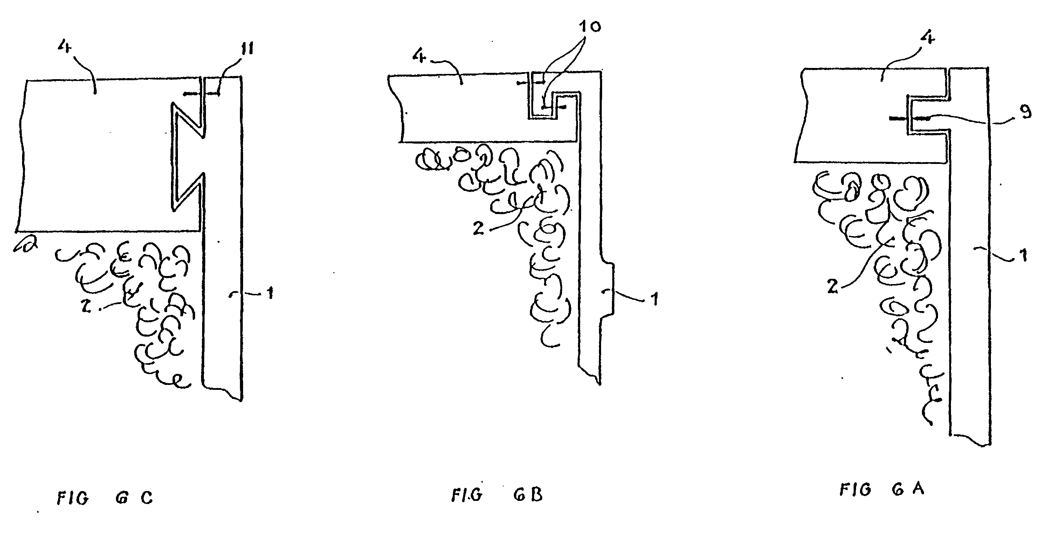

Figure 6 illustrates cross sections of embodied means for attaching and sealing a covering member to a base member. In Figure 6A, a covering member (4) (partially shown) has been cast onto the refuse' (2) filled base member (1) (partially shown). A common strengthening member (9) (of a plurality of common strengthening members) is partially embedded in the base member and partially embedded in the covering member. In Figure 6B, a covering member (4) (partially shown) has been cast onto the refuse (2) filled base member (1) (partially shown). An annular sealing gasket (10) guarantees that any mal-adaptation between the covering member and the base member will not result in gas or liquid leakage from inside the container, nor will it result in leakage of sea water into the container (if the container is used in a submerged meta-structure). In Figure 6C, a covering member (4) (partially shown) has been cast onto the refuse (2) filled base member (1) (partially shown), a gasket material (11) has been partially embedded between the covering member and the base member.

## Claims

1. A method for producing a concrete container for permanent waste storage, comprising
casting a base member (1) from concrete,
placing compressed refuse (2) and strengthening members (8) onto or into the base member (1), and
casting or spraying a covering member (4) simultaneously attached to the base member (1) for sealing said refuse,
so that the packaged compressed refuse (2) contains a plurality of strengthening members (8) attached to the concrete container.

2. A method according to claim 1, wherein the compressed refuse contains a plurality of strengthening members (8) and wherein said refuse (2) is put onto a square, circular, or rectangular platform base member (1), and wherein the covering member (4) has an open bottom side and is in the shape of a cube, a rectangular box, a partial sphere, a cylinder, or an obelisk.

3. A method according to claim 1, wherein the refuse (2) is compressed into a base member (1) reinforced with strengthening members (8), and wherein said base member (1) has an open top side and is in the shape of a cube, a rectangular box, a partial sphere, a cylinder, or an obelisk, and wherein the covering member (4) is square, circular, or rectangular, and wherein the base member (1) is reinforced.

4. A method according to preceding claims, wherein the strengthening members (8) are selected from iron reinforcement rods, cable, wire mesh, or reinforced concrete columns.

5. A method according to claim 4, wherein the strengthening members (8) are anodized, coated with plastic, or covered with means for protecting against corrosion.

6. A method according to claim 2, wherein the compressed refuse (2) is packaged prior to placing onto the base member (1).

7. A method according to claim 6, wherein the compressed refuse (2) is packaged by wrapping in polyehtylene film or by shrink wrapping with plastic film or by wrapping in a plurality of strengthening members.

8. A method according to claim 1, wherein the base member (1) or the covering member (4) has at least one outlet or valve for allowing gas expulsion from the interior volume of the concrete container.

9. A method according to claim 1, wherein the refuse (2) is incinerated prior to placing onto or into the base member (1).

10. A method according to claim 1, wherein incinerated refuse is mixed with the concrete, and said mixture is used for casting the base member (1) or the covering member (4).

11. A container, complete with refuse fill produced using the method according to preceding claims.

12. A method for constructing meta-structures from a plurality of the containers according to claim 11, comprising using a plurality of sealed refuse filled containers as building elements wherein said building elements are stacked, arranged, attached, or scattered in a predetermined pattern.

13. A method according to claim 12, wherein the building elements of the meta-structure forms a support wall, an earth slope stabilizing barrier, a bunker, a defense wall, a sea port, a wave breaker, a dam, or a dike.

14. A method according to claim 12, wherein the building elements of the meta-structure form the filling mass, the external super structure, ore the sea wall of a man-made island or a man-made peninsula.

15. A method according to claim 12, wherein spaces between the building elements are filled with earth, sand, clay, or stones.

16. A method according to claim 8 and 12, wherein the outlets or valves are connected to network of tubes or pipes, for directing the expelled gases to a predetermined location.

17. A method according to preceding claims, wherein the compressed refuse (2) is placed onto or into the base members (1) at or near the site of the construction.

## Patentansprüche

1. Verfahren zum Herstellen eines Betonbehälters zum dauerhaften Lagern von Abfall mit den folgenden Schritten:
Gießen eines Basiselementes (1) aus Beton,
Anordnen von verdichtetem Abfall (2) und Verstärkungselementen (8) an oder in dem Basiselement (1) und
Gießen oder Sprühen eines Abdeckelementes (4), das gleichzeitig an dem Basiselement (1) angebracht wird, um den Abfall abzudichten,
so dass der als Packung gestaltete verdichtete Abfall (2) eine Vielzahl an Verstärkungselementen (8) enthält, die an dem Betonbehälter angebracht sind.

2. Verfahren gemäß Anspruch 1, wobei
der verdichtete Abfall (2) eine Vielzahl an Verstärkungselementen (8) enthält und wobei der Abfall (2) an einem viereckigen, kreisartigen oder rechtwinkligen Plattformbasiselement (1) gesetzt wird, und wobei das Abdeckelement (4) eine offene Bodenseite hat und die Form eines Würfels, eines rechtwinkligen Kastens, einer Halbkugel, eines Zylinders oder eines Obelisken hat.

3. Verfahren gemäß Anspruch 1, wobei
der Abfall (2) in das Basiselement (1) verdichtet wird, das mit Verstärkungselementen (8) verstärkt ist, und wobei das Basiselement (1) eine offene obere Seite hat und die Form eines Würfels, eines rechtwinkligen Kastens, einer Halbkugel, eines Zylinders oder eines Obelisken hat, und wobei das Abdeckelement (4) viereckig, kreisartig oder rechtwinklig ist und wobei das Basiselement (1) verstärkt ist.

4. Verfahren gemäß einem der vorherigen Ansprüche, wobei
die Verstärkungselemente (8) aus Eisenverstärkungsstäben, Kabel, Drahtnetz oder verstärkten Betonsäulen ausgewählt werden.

5. Verfahren gemäß Anspruch 4, wobei
die Verstärkungselemente (8) anodisiert, mit Kunststoff beschichtet oder mit einer Einrichtung zum Schutz gegen Korrosion abgedeckt werden.

6. Verfahren gemäß Anspruch 2, wobei
der verdichtete Abfall (2) als Packung gestaltet wird, bevor er an dem Basiselement (1) angeordnet wird.

7. Verfahren gemäß Anspruch 6, wobei
der verdichtete Abfall (2) als Packung gestaltet wird, indem er in einem Polyethylenfilm gewickelt wird oder mit Kunststofffilm als Schrumpfpackung gestaltet wird oder in einer Vielzahl an Verstärkungselementen gewickelt wird.

8. Verfahren gemäß Anspruch 1, wobei
das Basiselement (1) oder das Abdeckelement (4) zumindest einen Auslass oder ein Ventil hat, um einen Gasausstoß aus dem Innenvolumen des Betonbehälters zu ermöglichen.

9. Verfahren gemäß Anspruch 1, wobei
der Abfall (2) verbrannt wird, bevor er an dem oder in dem Basiselement (1) angeordnet wird.

10. Verfahren gemäß Anspruch 1, wobei
verbrannter Abfall mit dem Beton vermischt wird und die Mischung verwendet wird, um das Basiselement (1) oder das Abdeckelement (4) zu gießen.

11. Behälter, der vollständig mit Abfallfüllung unter Verwendung des Verfahrens gemäß der vorherigen Ansprüche hergestellt wird.

12. Verfahren zum Bilden von Metastrukturen aus einer Vielzahl der Behälter gemäß Anspruch 11 mit dem folgenden Schritt
Anwenden einer Vielzahl an abgedichteten mit Abfall gefüllten Behältern als Bauelemente, wobei die Bauelemente gestapelt, angeordnet, angebracht oder verteilt werden bei einem vorbestimmten Muster.

13. Verfahren gemäß Anspruch 12, wobei
die Bauelemente der Metastruktur eine Stützwand, eine Erdhangstabilisierungsbarriere, einen Bunker, eine Schutzwand, einen Seehafen, einen Wellenbrecher, einen Damm oder einen Deich ausbilden.

14. Verfahren gemäß Anspruch 12, wobei
die Bauelemente der Metastruktur die Füllmasse, den äußeren Überbau oder die Meereswand oder Seewand einer vom Menschen gestalteten Insel oder einer vom Menschen gestalteten Halbinsel ausbilden.

15. Verfahren gemäß Anspruch 12, wobei
die Räume zwischen den Bauelementen mit Erde, Sand, Lehm oder Ton oder Steinen gefüllt werden.

16. Verfahren gemäß Anspruch 8 und 12, wobei
die Auslässe oder Ventile mit einem Netzwerk an Röhren oder Leitungen verbunden werden, um die heraustreibenden Gase zu einem vorbestimmten Ort zu richten.

17. Verfahren gemäß den vorherigen Ansprüchen, wobei
der verdichtete Abfall (2) an den oder in den Basiselementen (1) an dem Bauort oder in der Nähe des Bauortes angeordnet wird.

## Revendications

1. Procédé pour fabriquer un conteneur en béton destiné au stockage permanent de déchets, comprenant :
- le coulage d'un élément de base (1) à partir de béton,
- la mise en place de déchets compressés (2) et d'éléments de renforcement (8) sur ou dans l'élément de base (1), et
- le coulage ou la pulvérisation d'un élément de couverture (4) simultanément fixé à l'élément de base (1) afin de confiner lesdits déchets, de telle sorte que les déchets compressés conditionnés (2) contiennent une pluralité d'éléments de renforcement (8) fixés au conteneur en béton.

2. Procédé selon la revendication 1, dans lequel les déchets compressés contiennent une pluralité d'éléments de renforcement (8) et dans lequel lesdits déchets (2) sont placés sur un élément de base (1) formant plate-forme carrée, circulaire ou rectangulaire, et dans lequel l'élément de couverture (4) possède un côté inférieur ouvert et se trouve sous la forme d'un cube, d'une boîte rectangulaire, d'une sphère partielle, d'un cylindre ou d'un obélisque.

3. Procédé selon la revendication 1, dans lequel les déchets (2) sont compressés dans un élément de base (1) renforcé avec des éléments de renforcement (8), et dans lequel ledit élément de base (1) possède un côté supérieur ouvert et se trouve sous la forme d'un cube, d'une boîte rectangulaire, d'une sphère partielle, d'un cylindre ou d'un obélisque, et dans lequel l'élément de couverture (4) est carré, circulaire ou rectangulaire, et dans lequel l'élément de base (1) est renforcé.

4. Procédé selon les revendications précédentes, dans lequel les éléments de renforcement (8) sont choisis parmi des tiges de renforcement en fer, des câbles, des treillis métalliques ou des colonnes en béton armé.

5. Procédé selon la revendication 4, dans lequel les éléments de renforcement (8) sont anodisés, revêtus de matière plastique ou recouverts de moyens protégeant contre la corrosion.

6. Procédé selon la revendication 2, dans lequel les déchets compressés (2) sont conditionnés avant d'être placés sur l'élément de base (1).

7. Procédé selon la revendication 6, dans lequel les déchets compressés (2) sont conditionnés par emballage dans un film de polyéthylène ou par emballage thermorétractable avec un film de matière plastique ou par emballage dans une pluralité d'éléments de renforcement.

8. Procédé selon la revendication 1, dans lequel l'élément de base (1) ou l'élément de couverture (4) présente au moins un orifice d'évacuation ou clapet pour permettre l'expulsion de gaz depuis le volume intérieur du conteneur en béton.

9. Procédé selon la revendication 1, dans lequel les déchets (2) sont incinérés avant de les placer sur ou dans l'élément de base (1).

10. Procédé selon la revendication 1, dans lequel Des déchets incinérés sont mélangés au béton, et ledit mélange est utilisé pour couler l'élément de base (1) ou l'élément de couverture (4).

11. Conteneur, plein d'une masse de déchets, produit en utilisant le procédé selon les revendications précédentes.

12. Procédé pour construire des métastructures à partir d'une pluralité de conteneurs selon la revendication 11, comprenant l'utilisation d'une pluralité de conteneurs remplis de déchets et scellés à titre d'éléments de construction, dans lequel lesdits éléments de construction sont empilés, agencés, fixés ou dispersés selon un motif déterminé.

13. Procédé selon la revendication 12, dans lequel les éléments de construction de la métastructure forment un mur de soutien, une barrière stabilisatrice de talus, un bunker, un mur de défense, un port maritime, un brise-lames, un barrage ou une digue.

14. Procédé selon la revendication 12, dans lequel les éléments de construction de la métastructure forment la masse de remplissage, la superstructure externe, ou la digue marine d'une ile artificielle ou d'une péninsule artificielle.

15. Procédé selon la revendication 12, dans lequel les espaces entre les éléments de construction sont remplis de terre, de sable, d'argile ou de pierres.

16. Procédé selon les revendications 8 et 12, dans lequel les orifices d'évacuation ou clapets sont raccordés à un réseau de tubes ou de tuyaux afin de diriger les gaz expulsés vers un emplacement déterminé.

17. Procédé selon les revendications précédentes, dans lequel les déchets compressés (2) sont placés sur ou dans les éléments de base (1) sur ou près du site de construction.
